Europäisches Patentamt

European Patent Office

Office européen des brevets

(11) Publication number: **0 093 461**
A1

(12) **EUROPEAN PATENT APPLICATION**

(21) Application number: 83200409.7

(22) Date of filing: 23.03.83

(51) Int. Cl.³: **F 03 D 11/00**

(30) Priority: 26.03.82 NL 8201282

(43) Date of publication of application:
09.11.83 Bulletin 83/45

(84) Designated Contracting States:
BE DE FR GB IT NL SE

(71) Applicant: FDO Technische Adviseurs B.V.
No. 62, Oostenburgermiddenstraat
NL-1018 MS Amsterdam(NL)

(72) Inventor: Van de Geer, Peter Marinus
No. 2-J-P, Oud-AA
NL-3621 LB Breukelen(NL)

(74) Representative: Konings, Lucien Marie Cornelis
Joseph et al,
OCTROOIBUREAU ARNOLD & SIEDSMA Sweelinckplein
1
NL-2517 GK Den Haag(NL)

(54) Rotor cabin part of a divisible cabin for use in a windmill.

(57) Rotor cabin part releasably arranged in a divisible cabin of a windmill. The cabin part comprises the rotor shaft and a gear wheel drive for coupling the rotor shaft with the generator. The alignment of the rotor shaft and the gear wheel drive is relatively easy since the housing of both the gear wheel drive and of the rotor shaft is integrally arranged in the self supporting rotor cabin part.

FIG. 3

EP 0 093 461 A1

-1-

# Rotor cabin part of a divisible cabin for use in a windmill.

The invention relates to a rotor cabin part releasably arranged in a divisible cabin for use in a windmill provided with a horizontal rotor shaft, particularly for generating electricity, said rotor cabin part comprising, apart from the rotor shaft, a gear wheel drive coupled with said rotor shaft and having an output shaft for driving the generator, a turning motor and lubricating oil pump connected with the gear wheel drive and, in the case of adjustable rotor blades, the associated blade setting mechanism as well as control-means.

It is known to design such a rotor cabin part in the form of a self-supporting construction, on which are mounted the stools for the rotor shaft bearings, the gear box and various further mechanisms, apparatus and duct systems. In order to ensure satisfactory alignment of, in particular, the rotor shaft and the gear box, the fastening surfaces have to be precisely machined, which involves additional costs in the manufacture, whilst, moreover, mounting requires highskill and the mounting operation is time-consuming.

Because all parts of the rotor shaft, bearing and the gear box itself to be mounted have to satisfy strength and rigidity requirements, which also applies to the cabin construction, the weight of the cabin with the mechanisms accomodated therein is fairly heavy.

The invention has for its object to eliminate the inconveniences of the prior art construction. According to the invention this is achieved in that a housing of the gear wheel drive and the rotor shaft is integrally arranged in the self-supporting rotor cabin part.

The rotor cabin part is preferably constructed in the form of a largely hollow truncated cone having at the base an annular flange and a wall at the top of an inwardly directed, cylindrical rotor bearing housing and internally at least ene transverse support, for example, a transverse partition integral with the integrated gear wheel drive housing.

Such a construction is rigid and has a light weight and it eliminates aligning problems in mounting thanks to the fixed relative orientation of the rotor bearing housing and the gear wheel drive housing. In order to permit of mounting internal parts of the mechanisms the rotor cabin part is preferable divided in the longitudinal direction into two parts. The two parts are located with relatively fitting flanges in a plane going through the rotor axis and fastened to one another by means of bolts.

The conical wall of the rotor cabin part is preferably provided on the outside with stiffening ribs, which have the additional function of cooling vanes for cooling the lubricating oil contained in the rotor cabin part.

On the outer side of the wall forming the base of the frustoconical rotor cabin part are preferably mounted the turning motor, the lubricating oil pump and the drive of the blade setting mechanism. Therefore, these small components are readily accessible from the interior of the cabin for inspection as the case may be, for local replacement. The frequency of disengagements of the rotor cabin part is thus limited.

The aforesaid and further features of the invention will become apparent in the following description with reference to a drawing.

The drawing shows in:

Fig. 1 a side elevation of a windmill embodying the invention,

Fig. 2 an enlarged, fragmentary, exploded side elevation of a detail II of Fig. 1,

Fig. 3 an enlarged side elevation and partly a sectional view of detail III of Fig. 1,

Fig. 4 a sectional view taken on the line IV-IV in Fig. 3,

Fig. 5 an elevational view in the direction of the arrows V in Fig. 3,

Fig. 6 a sectional view taken on the line VI-VI in Fig. 3,

Fig. 7 an enlarged side elevation and partly a sectional view of detail VII of Fig. 3, and

Fig. 8 a side elevation corresponding to Fig. 3 of a variant of the mechanism shown in Fig. 3.

A windmill park may comprise a series of identical windmills 1 embodying the invention, which windmills 1 may be of the horizontal shaft type and a hoisting implement adapted to travel along said windmills.

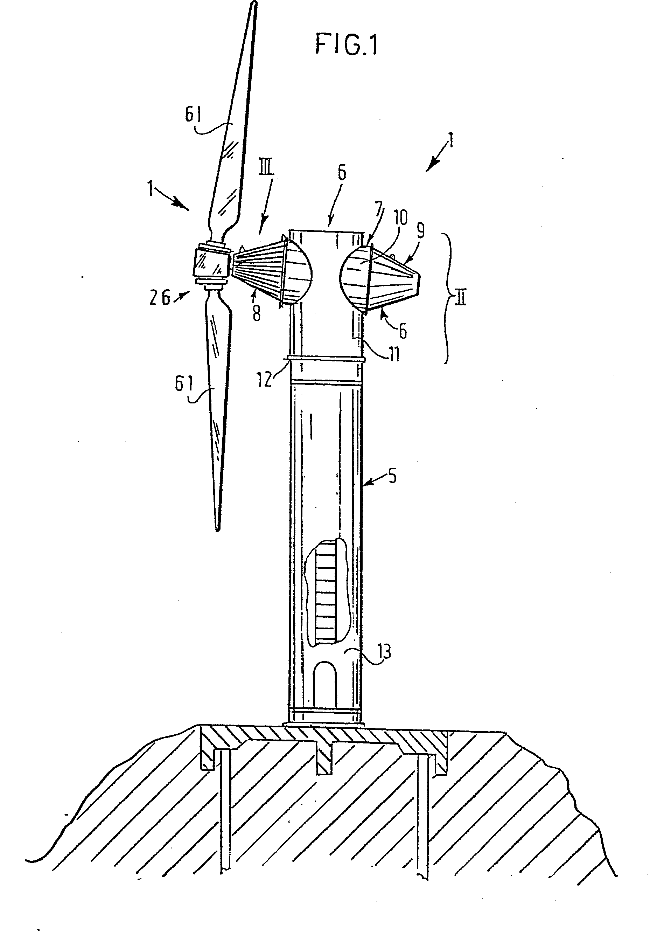

Each windmill 1 (Fig. 1) comprises a mill shaft 5 and a cabin 6 carried by the mill shaft 5.

The cabin 6 comprises a stationary cabin part 7 and two cabin parts 8 and 9 mounted on the stationary cabin part 7.

The stationary cabin part 7 has the shape of a horizontal cylinder 10, which is connected with and welded to a cylindrical topmost mill shaft part 11. By means of said mill shaft part 11 and a rotary crown 12 the stationary cabin part 7 is rotatably arranged on a stationary mill shaft 13 of the mill shaft 5.

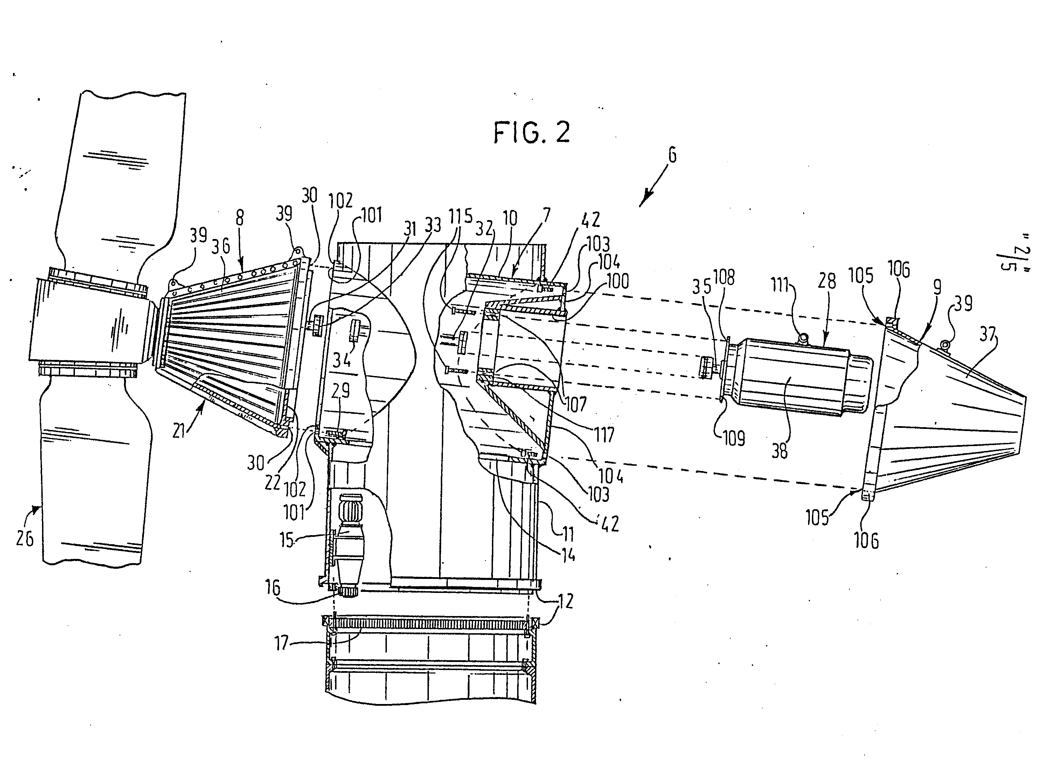

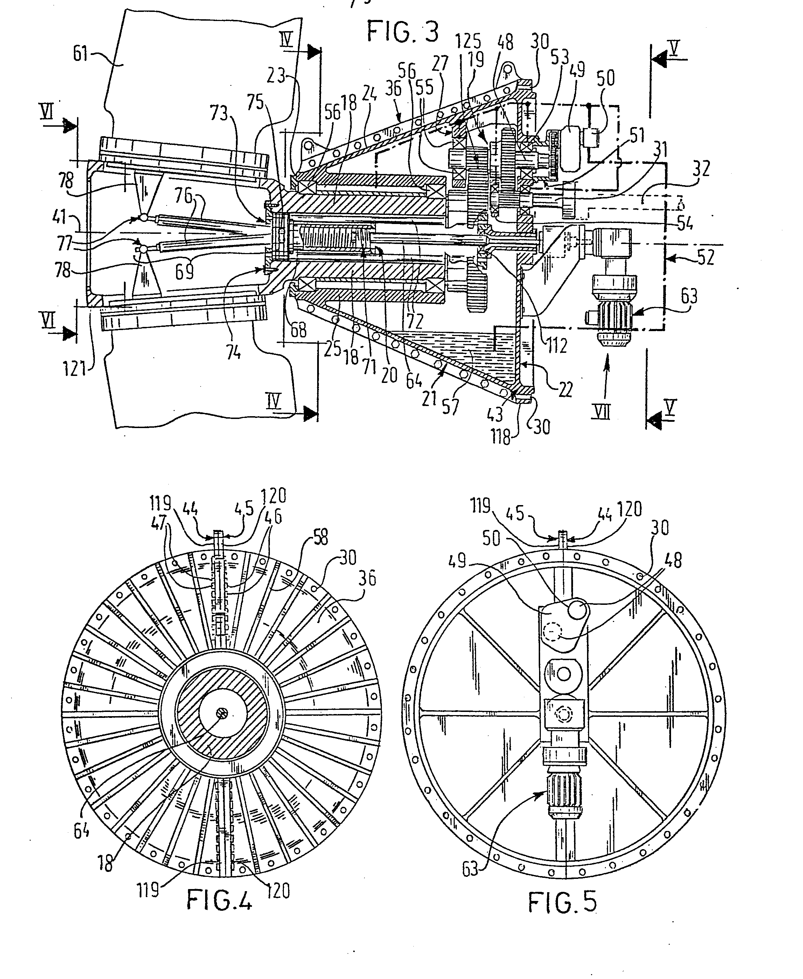

For turning the cabin 6 at least one electric motor 15 is provided, which drives via a pinion 16 and a toothed crown 17 the cabin 6 for wheeling the same (Fig. 2). On the underside the stationary cabin part 7 has a manhole 14 so that the cabin 6 is accessible from the interior of the mill shaft 5. The cabin part 8 (Fig. 3), hereinafter termed rotor cabin part 8, comprises a number of mechanisms to wit: a rotor shaft 18, a gear wheel drive 19 and a blade setting mechanism 20. This rotor cabin part 8 comprises a cabinet 21 having a wall 22 fastened to the stationary cabin part 7, a free end 23 directed towards a mill rotor 26 and an intermediate, diverging jacket 24, a rotor bearing housing 25, in which a mill rotor 26 is journalled by means of its rotor shaft 18 and a gear wheel drive housing 27, in which the gear wheel drive 19 is journalled, which is driven by the rotor shaft 18.

The cabin part 9, hereinafter termed generator screening hood 9, has the shape of a truncated cone and surrounds a mechanism comprising a generator 28 journalled on the stationary cabin part 7.

An intermediate shaft 32 arranged in the stationary cabin part 7 connects by means of disengageable couplings 33 and 34 and output shaft 31 of the gear wheel drive 19 with a shaft of the generator 28.

The rotor cabin part 8 with the mechanisms 18, 19 and 20 arranged therein and the stationary cabin part 7 are detachably interconnected with the aid of fastening means formed by bolts 29. The generator screening hood 9 surrounding the generator 28 and the generator 28 journalled on the stationary cabin part 7 by a sliding fit in a carrying frame 100 on the one hand and the stationary cabin part 7 on the other hand are detachably interconnected by fastening means formed by bolts 42 for the generator screening hood 9 and by bolts 115 for the generator 28.

On an outer face 26, 37 of the rotor cabin part 8 and the generator screening hood 9 and on a generator housing 28 of the generator 28 are provided tackle fastening means formed by tackling eyelets 39 and 111. A hoisting cord of the hoisting implement can be fastened to the tackling eyelets 39 or 111 in order to remove the rotor cabin part 8, the generator screening hood 9 or the generator 28 from the stationary cabin part 7.

The bolts 29 fastening the rotor cabin part 8 to the stationary cabin part 7 can be manipulated from within the cabin 6 and are screwed through holes 101 in a centering flange 102 of the stationary cabin part 7 into tapped holes 30 of the wall 22 of the rotor cabin part 8.

The rotor cabin part 8 and the mechanisms 18, 19, 20 surrounded by the rotor cabin part 8 can be removed together by a single manipulation with the aid of the hoisting implement from the stationary cabin part 7, after in order of succession the hoisting cord of the hoisting implement is fastened to the eyelets 39 of the rotor cabin part 8, the coupling 33 is loosened from within the cabin 6 and the bolts 29 fastening the rotor cabin part 8 to the stationary cabin part 7 are unscrewed.

The bolts 42 fastening the generator screening hood 9 to the stationary cabin part 7 can be manipulated from within the cabin 6 and are screwed through holes 103 in a flange 104 of the stationary cabin part 7 into tapped holes 105 of a flange 106 of the generator screening hood 9.

The generator screening hood 9 can be removed from the stationary cabin part 7, after in order of succession the hoisting cord of the hoisting implement is fastened to the eyelet 39 of the generator screening hood 9 and the bolts 42 fastening the generator screening hood 9 to the stationary cabin part 6 are unscrewed from within the cabin 6.

The bolts 115 fastening the generator 28 to the stationary cabin part 7 are screwed through holes 107 in a centering flange structure 117 of the carrying frame 100 of the stationary cabin part 7 into tapped holes 108 of a flange 109 of the generator 28.

When the generator screening hood 9 is removed from the stationary cabin part 7, the generator 28 can be removed with the aid of the hoisting implement from the stationary cabin part 7 after, in order of succession, the hoisting cord of the hoisting implement is fastened to the eyelet 111 of the generator housing 38, the coupling 34 is loosened from within the cabin 6, the bolts 115 are unscrewed from within the cabin 6 and the generator 28 is slipped out of the carrying frame 100 in which it is accomodated with sliding fit.

The rotor cabin part 8 and the mechanisms 18, 19, 20 surrounded by the rotor cabin part 8 constitute an integral unit which is detachably connected on the one hand with the stationary cabin part 7 on the other hand with one another. Furthermore the generator hood 9 and the mechanism 28 surrounded by the generator hood 9 are detachably connected each with the stationary cabin part 7 and with one another.

The rotor cabin part 8 of the cabin 6 of the windmill 1 comprises the cabinet 21, the rotor bearing housing 25 and the gear wheel drive housing 27. The rotor bearing housing 25 and the gear wheel drive housing 27 are accomodated in the cabinet 21, the diverging jacket 24 of which forms a wall 24 of the gear wheel drive housing 27 (Fig. 3). In a longitudinal plane bounded by the rotor axis 41 are undetachably connected parts of the diverging jacket 24, parts of the gear wheel drive housing 27 and parts of the rotor bearing housing 27 and are associated with one and the same monolith 43. The cabinet 21, the rotor bearing housing 25 and the gear wheel drive housing 27 constitute an integral unit. This integral unit is divisible in the direction of the rotor axis 41 into two monolithicparts 44 and 45 (Figs. 4 and 5). The monolithic parts 44, 45 are fastened to one another by fastening means comprising bolts 46 and nuts 47.

By means of additional gear wheels 125 and auxiliary output shafts 48 auxiliary mechanisms, for example, a turning motor 49 and a lubricating oil pump 50 are coupled with the rotor shaft 18 by means of the gear wheel drive 19. A frame 15 for the auxiliary mechanisms 49 and 50 is detachably fastened to the wall 22 of the cabinet 21 of the rotor cabin part 8. The lubricating oil pump 50 supplied through oil ducts 52 the lubricating oil 57 to the bearings 53 to 56 the oil being collected below in the cabinet 21. The outer face 36 of the diverging jacket 24 is provided with cooling vanes 58 for cooling the lubricating oil 57 contained in the cabinet 21.

The cooling vanes 58 provided on the outer face 36 of the diverging jacket 24 serve in addition as stiffening vanes. The cabin 6 is self-supporting and derives the required rigidity from its shape.

The blade setting mechanism 20 for adjusting rotor blades 61 of the mill rotor 26, which is rotatably journalled by means of its rotor shaft 18 on the rotor cabin part 8 of the cabin 6 of the windmill 1 is passed through the hollow rotor shaft. The blade setting mechanism 20 comprises a rotation motor for example, an electric motor 63 fed from a source of energy 62 and setting means comprising a spindle shaft 64 coupling the electric motor 63 with the rotor blades 61.

The spindle shaft 64 is journalled by means of a bearing 112 in the hollow rotor shaft and is rigidly connected at one end with the output shaft of a reducing gear box on the electric motor 63. At the other end the spindle shaft is in engagement by means of a worm 71 with a gland 68, which is displaceable in an axial direction in the hollow rotor shaft 18 and guarded against rotation and which is furthermore connected through a rod system 69 with the consoles 78 on the collar 59 of the rotor blades 61 rotatably journalled in the rotor hub 121. Between the spindle shaft 64 and the rotor shaft 18 is arranged an electro-magnetic coupling 65 and on the shaft 67 of the driving motor 63 an electro-magnetic brake 66.

Setting of the rotor blades 16 occurs when the spindle shaft 64 has a speed of rotation differing from that of the rotor shaft in a manner such that, when the spindle shaft 64 rotates in the same direction more rapidly than the rotor shaft 18, the rotor blades 61 are adjusted from the vane position and, when the spindle shaft 64 rotates more slowly, adjustment takes place towards the vane position. When during the operation of the windmill 1 no blade setting is needed, the spindle shaft 64 is fixedly coupled with the rotor shaft 18 by means of the electro-magnetic coupling 65, whilst the electro-magnetic brake 66 is not operative and the electric motor 63 is not energized.

If during operation the rotor blades 61 have to be adjusted, the electro-magnetic coupling 65 as well as the electro-magnetic brake 66 are inoperative and the electric motor 63 is energized in order to attain the number of revolutions required for the adjustment.

The electric motor 63 can be driven with at least two speeds, a high speed so that the spindle shaft 64 assumed a rotary speed equal to that of the rotor shaft 18 at the maximum permissible operative rotor speed and a low speed so that the spindle shaft 64 assumed a rotary speed equal to or lower than that of the rotor shaft 18 at the minimum operative rotor speed. Therefore, for causing a windmill 11 to attain the operative speed out of the rest position, in which the rotor blades 61 are in the vane position, the electric motor 63 has to be driven first with a low speed and subsequently with a high speed in order to attain an operative rotor speed lying between minimum and maximum. In order to reduce the maximum operative speed to the minimum operative speed the electric motor 63 has to be driven with the low speed. If the windmill 1 after having reached the minimum operative speed has to be set in the rest position, the manipulations described hereinafter are carried out for putting the windmill out of operation in an emergency case.

When due to a state of emergency the windmill 1 has to be put out of operation as soon as possible, this is performed with the blade setting mechanism 29 in accordance with the invention in the safest manner as follows:
The electro-magnetic coupling 65 is disengaged by obviating the electric power and the electro-magnetic brake 66 is caused to operate also by obviating the electric energization, whilst the electric energization of the electric motor 63 is also switched off. As result the spindle shaft rotation is slowed down with respect to the rotor shaft rotation and the rotor blades 61 are adjusted towards the vane position so that the mill rotor 26 is aerodynamically braked, whilst for this adjustment no internal source of energy is required.

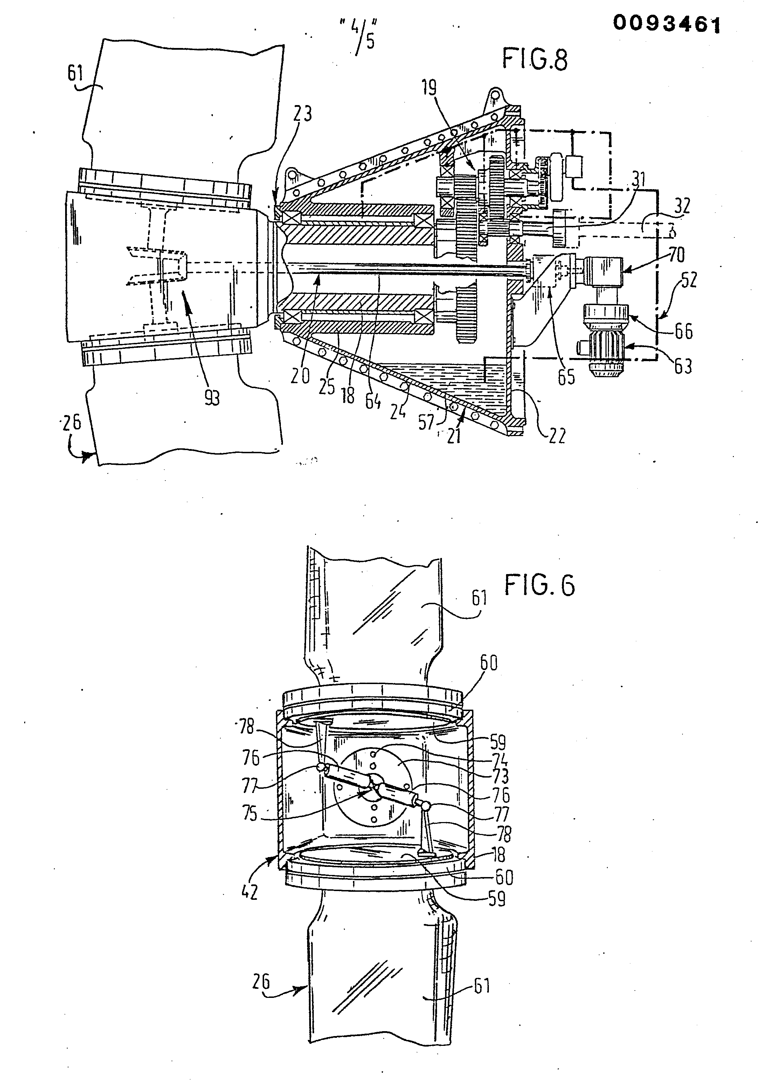

In the holow rotor shaft 18 the spinle shaft 64 is coupled by means of a worm 71 with the gland 68, which is slidably journalled in the hollow rotor shaft 18 by means of guide rods 72 and is guarded against rotation with respect to the rotor shaft 18. The rotor shaft 18 is provided with an annular bumper 73, which is fastened by means of bolts 74 to the rotor shaft 18 and on which the guide rods are arranged. By means of ball-and-socket joints 75 the gland 68 is coupled with the rod system 69. The rod system 69 comprises rods 76, which are connected to the one hand by means of ball-and-socket joints with the gland 68 and on the other hand by means of ball-and-socket joints 77 with consoles 78 (Fig. 6). The console 78 is fastened to a collar 59 of the rotor blade 61, which is rotatably journalled by means of a rotary crown 60 at the free end 42 of the rotor shaft 18.

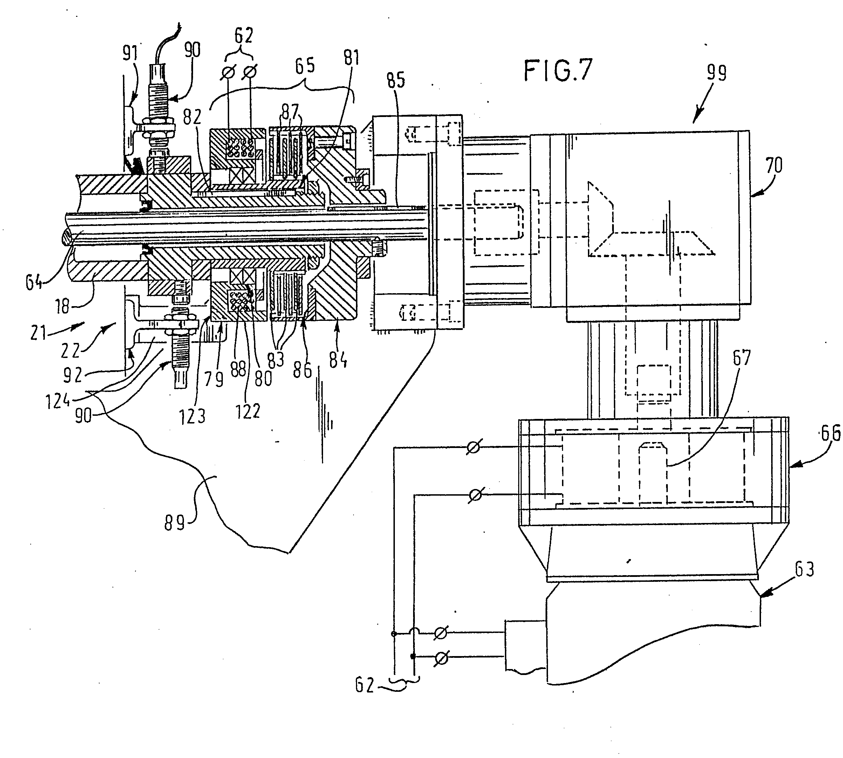

The electro-magnetic multiple disc clutch 65 comprises an annular electro-magnet 79 accommodated in an energization housing 122 and journalled by means of bearings 80 around a star wedge sleeve 81 (Fig. 7). The energization housing 122 is guarded against rotation with respect to the wall 22 of the rotor cabin part 8 and for this purpose the energization housing 122 has at least one recess 123 for a lug 124 fastened to the wall 22. The star wedge sleeve 81 is arranged around the rotor shaft 18 and guarded against rotation with respect to ; the rotor shaft 18 by means of a key . On the star wedge sleeve 81 are arranged axially slidable lamellae 83 guarded against rotation relative to the star wedge sleeve 81 and extending in an radial direction. The lamellae 83 are surrounded by a star wedge housing 84, which is arranged on the spindle shaft 64 and guarded against rotation relative to the spindle shaft by means of a key 85. On the inner face 86 of the star wedge housing 84 are arranged axially slidable lamellae 87 guarded against rotation relative to the star wedge housing 84 and extending in spaces between the lamellae 83 and the star wedge housing 84. When the electro-magnet 79 is energized, a magnetic field is induced in the coil 88 so that the lamellae 87 of the star wedge housing 84 and the lamellae 83 of the star wedge sleeve 81 shift in an axial direction up to a stationary inner face 86 of the star wedge housing 84 so that the lamellae 87 and 84 engage one another as a result of which the spindle shaft 64 is coupled with the rotor shaft 18.

The electric motor 63 and the electro-magnetic brake 66 acting on the shaft 67 of the electric motor 63 are fastened to a frame 89 by means of the reduction gearing housing 99 of the reduction gearing 70. The frame 89 is releasably connected with the built-on wall 22 of the cabinet 21 of the rotor cabin part 8.

A control-system for actuating the blade setting mechanism 20 includes feelers 90 accessing the rotary speed of the rotor shaft 18 and being connected by fastening means 91, 92 with the wall 22 of the cabinet 21 of the rotor cabin part 8. The control-signals required for the blade setting mechanism originate from the control-system which will not be discussed herein.

In dependence on the signals from the control-system the blades 61 are adjusted by means of the blade setting mechanism 20 towards and, respectively, away form the vane position.

When the electric power is lacking due to disturbance, the electro-magnetic clutch 65 is released so that the spindle shaft 64 is disconnected from the rotor shaft 18, whilst the electro-magnetic brake 66 on the electric motor shaft 67 of the electric motor 63 is actuated so that the rotation of the spindle shaft 64, which is coupled by means of the reduction gearing 70 with the electric motor shaft 67, is slowed down relatively to the rotor shaft 18 and the rotor blades 61 are adjusted towards the vane position without using the electric motor 63 and the mill rotor 26 comes to a standstill.

The variant of the blade setting mechanism 20 shown in Fig. 8 is identical to the blade setting mechanism 20 of Fig. 3, the difference being that the spindle shaft 64 is coupled through a bevel gearing 93 with the rotor blades 61.

The rotor cabin part 8 embodying the invention, with which the cabinet 21, the rotor bearing housing 25 and the gear wheel drive housing 27 constitute an integral unit, can be removed together with the mechanisms 18, 19, 20 surrounded by the rotor cabin part 8 as an unit from the stationary cabin part 7 of the cabin 6. In the case of a windmill park the rotor cabin part 8 to be removed for maintenance or repair purposes can be replaced by a spare rotor cabin part 8, after which the maintenance and repair operations can be carried in a revision shop.

To the generator 28 applies the same as to the rotor cabin part 8.

-1-

C L A I M S

1. A rotor cabin part releasable from a cabin for use in a windmill provided with a horizontal rotor shaft, particularly for generating electricity, said rotor cabin part comprising, apart from the rotor shaft, a gear wheel drive coupled with the rotor shaft and having an output shaft for driving a generator, a turning motor connected with the gear wheel drive and a lubricating oil pump and, in the case of adjustable rotor blades, an associated blade setting mechanism as well as control-means, characterized in that a housing of the gear wheel drive and the rotor shaft is integralle accommodated in the construction of the self-supporting rotor cabin part.

2. A rotor cabin part as claimed in claim 1, characterized in that the rotor cabin part is constructed in the form of a largely hollow, truncated cone provided at the base with an annualr flange and a wall at the top of an inwardly directed, cylindrical rotor bearing housing and internally with at least one transverse support, for example, a transverse partition as a part of the integrated gear wheel drive housing.

3. A rotor cabin part as claimed in claim 2, characterized in that the rotor cabin part is divided in the longitudinal direction into two parts, which are located with relatively fitting flanges in a plane going through the rotor axis and interconnected by means of bolts.

4. A rotor cabin part as claimed in claim 3, characterized in that a conical wall is provided on the outer side in a longitudinal direction with stiffening ribs, which have the additional function of cooling vanes for cooling the lubricating oil contained in the rotor cabin part.

5. A rotor cabin part as claimed in claim 2, characterized in that externally on the wall at the base of the frustoconical rotor cabin part are arranged the turning motor, the lubricating oil pump and, in the case of adjustable rotor blades, the drive of the blade setting mechanism.

## FIG.1

FIG. 2

FIG. 3

FIG.4

FIG.5

0093461

FIG.8

FIG.6

FIG.7

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | M.A.N. FORSCHEN PLANEN BAUEN, no. 9, April 1978, pages 32-36, Augsburg, DE. J. FEUSTEL: "Nutzbare Energie aus Wind und Sonne" * Figure 9 * | | F 03 D  11/00 |
| | - - - | | |
| A | DE-B-2 823 525  (MAN) | | |
| | - - - - - | | |

TECHNICAL FIELDS
SEARCHED (Int. Cl. ³)

F 03 D

The present search report has been drawn up for all claims

| Place of search | Date of completion of the search | Examiner |
|---|---|---|
| THE HAGUE | 26-08-1983 | DE WINTER P.E.F. |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons
 
& : member of the same patent family, corresponding
      document

EPO Form 1503. 03. 82